(19) Europäisches Patentamt / European Patent Office / Office européen des brevets

(11) **EP 3 028 182 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(51) Int Cl.:
***G06F 17/30*** *(2006.01)*

(21) Anmeldenummer: **14748164.2**

(22) Anmeldetag: **31.07.2014**

(86) Internationale Anmeldenummer:
**PCT/EP2014/066531**

(87) Internationale Veröffentlichungsnummer:
**WO 2015/014955 (05.02.2015 Gazette 2015/05)**

(54) **VERFAHREN UND SYSTEM ZUR SYNCHRONISATION VON DATEN**

METHOD AND SYSTEM FOR SYNCHRONISING DATA

PROCÉDÉ ET SYSTÈME DE SYNCHRONISATION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013 DE 102013108306**

(43) Veröffentlichungstag der Anmeldung:
**08.06.2016 Patentblatt 2016/23**

(73) Patentinhaber: **OMS Software GmbH**
**81241 München (DE)**

(72) Erfinder: **KRAMER, Christian**
**81243 München (DE)**

(74) Vertreter: **2s-ip Schramm Schneider Bertagnoll Patent- und Rechtsanwälte Part mbB**
**Postfach 86 02 67**
**81629 München (DE)**

(56) Entgegenhaltungen:
WO-A1-2007/117132   WO-A1-2010/036983
US-A- 5 392 390   US-A1- 2004 199 536
US-A1- 2006 259 517   US-B1- 7 490 112

**Beschreibung**

Gebiet der Erfindung

Die Erfindung betrifft ein Verfahren zur Synchronisation eines ersten Datenobjektes mit zumindest einem zweiten Datenobjekt sowie ein System zur Synchronisation eines ersten Datenobjektes mit zumindest einem zweiten Datenobjekt.

Stand der Technik und Hintergrund der Erfindung

Synchronisationsverfahren zur Synchronisation von Daten bzw. Datenobjekten sind aus dem Stand der Technik bekannt. Im Bereich der Terminverwaltung ist es beispielsweise bekannt, Termine, die auf einer ersten Clienteinrichtung, etwa ein Personal Computer, angelegt und verwaltet werden, mit Terminen, die auf einer zweiten Clienteinrichtung, etwa ein Tablet-PC oder Smartphone, angelegt bzw. verwaltet werden, zu synchronisieren, wobei die Termine in beiden Clienteinrichtungen mit demselben Softwaresystem, etwa Microsoft Outlook, angelegt bzw. verwaltet werden. Die in den beiden Softwaresystemen angelegten bzw. verwalteten Termine weisen in der Regel die gleiche Datenstruktur auf, sodass die Synchronisation der Termine in der ersten Clienteinrichtung mit den Terminen in der zweiten Clienteinrichtung ohne Probleme abgewickelt werden kann. Synchronisation bedeutet, dass die Termine der einen Clienteinrichtung mit den Terminen der anderen Clienteinrichtung so abgeglichen werden, dass in beiden Clienteinrichtungen sämtliche Termine auf dem aktuellen Stand sind.

Wenn allerdings Datenobjekte, die aus unterschiedlichen Systemen stammen, miteinander synchronisiert werden sollen, müssen zusätzliche Vorkehrungen getroffen werden, um einen Datenabgleich durchzuführen. Werden beispielsweise in einer ersten Clienteinrichtung Termine mit einem ersten Softwaresystem, etwa Microsoft Outlook, und in einer zweiten Clienteinrichtung Termine mit einem zweiten Softwaresystem, etwa Google Calendar, verwaltet, muss für die Durchführung einer Synchronisation eine Schnittstelle bzw. ein Adapter zwischen den beiden Softwaresystemen zur Verfügung gestellt werden, über den die Synchronisation abgewickelt werden kann. Hierbei muss sichergestellt werden, dass der Adapter bzw. die Schnittstelle angepasst ist, eine Synchronisation in beide Richtungen durchzuführen. Weil in der Regel die Outlook-Termine eine andere Datenstruktur bzw. anders benannte Attribute aufweisen als beispielsweise die Google-Termine, ist es notwendig, die Attribute der Outlook-Termine auf die Attribute der Google-Termine abzubilden und umgekehrt. Eine Definition der jeweiligen Abbildungsvorschriften muss entweder in dem jeweiligen Softwaresystem oder in der Schnittstelle bzw. Adapter definiert bzw. hinterlegt werden.

Werden nur Daten bzw. Datenobjekte einer bestimmten Klasse, etwa Termine, zwischen genau zwei verschiedenen Softwaresystemen synchronisiert, hält sich der technische Aufwand eine Synchronisierung zu realisieren in Grenzen, denn für die Abwicklung der Synchronisation muss lediglich ein Adapter bzw. eine Schnittstelle und zwei entsprechend angepasste Abbildungsvorschriften zur Verfügung gestellt werden.

Dieses Verfahren ist allerdings nachteilig, wenn Daten bzw. Datenobjekte zwischen mehr als zwei Softwaresystemen synchronisiert werden sollen. Dieses Verfahren ist auch dann nachteilig, wenn mehr als zwei Datenobjekte synchronisiert werden sollen, die jeweils unterschiedlichen Typs sind (beispielsweise eine Synchronisation von drei Terminobjekten, wobei jedes Terminobjekt eine andere Datenstruktur aufweist). In diesem Fall muss für jedes Paar von Softwaresystemen bzw. für jedes Paar von unterschiedlichen Datenobjekten eine Schnittstelle bzw. Adapter und zwei dazugehörige Abbildungsvorschriften definiert werden, sodass bei drei unterschiedlichen Datenobjekten bereits drei Schnittstellen und sechs Abbildungsvorschriften zu definieren sind.

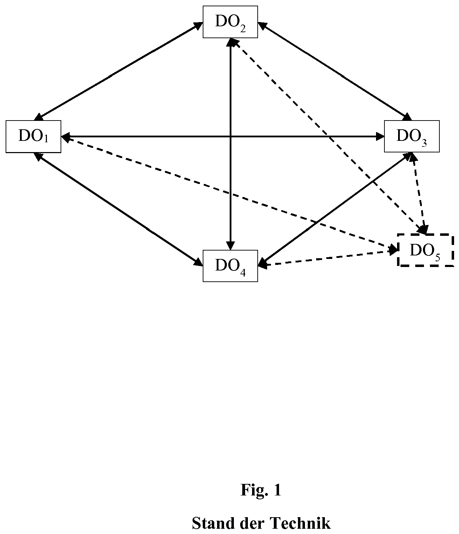

**Fig. 1** veranschaulicht das aus dem Stand der Technik bekannte Verfahren für vier unterschiedliche Datenobjekte $DO_1$ bis $DO_4$. Die Datenobjekte $DO_1$ bis $DO_4$ können jeweils Termine repräsentieren, wobei diese vier Datenobjekte jeweils eine unterschiedliche Datenstruktur aufweisen. Damit diese vier Datenobjekte $DO_1$ bis $DO_4$ synchronisiert werden können (alle vier Datenobjekte sollen zueinander synchron sein), müssen sechs Schnittstellen bzw. Adapter und insgesamt zwölf Abbildungsvorschriften definiert werden. Kommt ein zusätzliches Datenobjekt $DO_5$, das wiederum eine andere Datenstruktur aufweist, hinzu, müssen für dieses Datenobjekt $DO_5$, wenn es mit den Datenobjekten $DO_1$ bis $DO_4$ synchronisiert werden soll, vier zusätzliche Schnittstellen bzw. Adapter und acht zusätzliche Abbildungsvorschriften definiert werden.

Für zu synchronisierende Datenobjekte müssen bei dem aus dem Stand der Technik bekannten Verfahren demnach $\binom{n}{2}$ bzw. $\frac{n \cdot (n-1)}{2}$ Adapter bzw. Schnittstellen und $\binom{n}{2} \cdot 2$ bzw. $n \cdot (n-1)$ Abbildungsvorschriften implementiert werden.

Aufgabe der Erfindung

Der Erfindung liegt daher die technische Aufgabe zugrunde, Lösungen für eine Synchronisation bereitzustellen, welche die aus dem Stand der Technik bekannten Nachteile zumindest teilweise vermeiden und mit welchen die Anzahl der notwendigen Schnittstellen bzw. Adapter sowie die Anzahl der notwendigen Abbildungsvorschriften erheblich reduziert werden können und mit welchen dennoch eine möglichst effektive Synchronisation ermöglicht wird.

Erfindungsgemäße Lösung

Diese Aufgabe wird erfindungsgemäß durch ein Verfahren zur Synchronisation eines ersten Datenobjektes mit zumindest einem zweiten Datenobjekt sowie durch ein System zur Synchronisation eines ersten Datenobjektes mit zumindest einem zweiten Datenobjekt nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Computer-implementiertes Verfahren zur Synchronisation eines ersten Datenobjektes mit zumindest einem zweiten Datenobjekt, wobei jedes Datenobjekt eine Anzahl von Attribute umfasst, wobei

- jedes Datenobjekt einer Metaklasse aus einer Anzahl von Metaklassen zugeordnet wird, wobei die Metaklassen in einer Baumstruktur mit einer Wurzelmetaklasse organisiert sind, und wobei die Metaklassen jeweils eine Anzahl von Attribute umfassen;
- in der Baumstruktur eine Metaklasse ermittelt wird, die sich auf dem Pfad zwischen dem ersten Datenobjekt und der Wurzelmetaklasse und auf dem Pfad zwischen dem zweiten Datenobjekt und der Wurzelmetaklasse befindet,
- aus der ermittelten Metaklasse ein erstes Metaobjekt und ein zweites Metaobjekt erzeugt werden;
- eine erste Transformation durchgeführt wird, bei der das erste Datenobjekt in das erste Metaobjekt transformiert wird;
- eine zweite Transformation durchgeführt wird, bei der das zweite Datenobjekt in das zweite Metaobjekt transformiert wird;
- das erste Metaobjekt und das zweite Metaobjekt synchronisiert werden; und
- eine dritte Transformation durchgeführt wird, bei das erste Metaobjekt in das erste Datenobjekt transformiert wird und/oder das zweite Metaobjekt in das zweite Datenobjekt transformiert wird.

Damit können in vorteilhafter Weise eine Anzahl unterschiedlicher Datenobjekte, die jeweils eine andere Datenstruktur aufweisen und sogar aus unterschiedlichen Softwaresystemen bzw. -anwendungen stammen können miteinander synchronisiert werden, ohne dass für jedes Paar von Datenobjekten einer Schnittstelle mit entsprechenden Synchronisationsvorschriften definiert und implementiert werden muss, um eine Datenstruktur auf die jeweils andere Datenstruktur abzubilden. Auf Schnittstellen bzw. Adapter zwischen jeweils zwei Datenobjekten unterschiedlicher Datenstruktur und auf die dazugehörigen Abbildungsvorschriften kann vollständig verzichtet werden

Aus technischer Sicht wird durch die Erfindung vermieden, dass für *n* zu synchronisierende Datenobjekte (jedes Datenobjekt kann mit jedem anderen Datenobjekt synchronisiert werden), die jeweils eine andere Datenstruktur aufweisen, $\frac{n \cdot (n-1)}{2}$ Schnittstellen implementiert und $n \cdot (n - 1)$ Abbildungsvorschriften zur Verfügung gestellt werden müssen. Dadurch kann eine Synchronisation von Datenobjekten wesentlich effektiver und mit erheblich geringerem Implementierungsaufwand realisiert werden, als aus dem Stand der Technik bekannt, insbesondere wenn die zu synchronisierenden Datenobjekte aus einer Vielzahl unterschiedlicher Systeme stammen. Fehlerquellen bei der Implementierung von Abbildungsvorschriften und bei der Implementierung von Schnittstellen werden effektiv vermieden. Hinzu kommt, dass es bei einer Änderung der Datenstruktur eines Datenobjektes im Stand der Technik notwendig ist, sämtliche Schnittstellen und die damit verbundenen Abbildungsvorschriften anzupassen, während bei dem erfindungsgemäßen Verfahren lediglich die Beziehung der entsprechenden Metaklasse zu der einen übergeordneten Metaklasse angepasst werden muss.

Vorzugsweise ist jedes Datenobjekt genau einer Metaklasse aus der Anzahl von Metaklassen zugeordnet.

Die ermittelte Metaklasse ist eine Metaklasse, von der die Metaklassen, denen das erste Datenobjekt bzw. das zweite Datenobjekt zugeordnet wird, direkt oder indirekt abgeleitet sind. Demnach ist die ermittelte Metaklasse eine gemeinsame Vaterklasse jener Metaklassen, denen das erste Datenobjekt bzw. das zweite Datenobjekt zugeordnet wird.

Die ermittelte Metaklasse kann jene Metaklasse sein, die sich auf dem Pfad zwischen dem ersten Datenobjekt und/oder zwischen dem zweiten Datenobjekt und der Wurzelmetaklasse in der Hierarchie der Baumstruktur am weitesten unten befindet.

"Am weitesten unten" bedeutet, dass der Abstand zwischen der Wurzelmetaklasse und der ermittelten Metaklasse maximal ist. Werden mehrere Metaklassen ermittelt, die sich auf dem Pfad zwischen dem ersten Datenobjekt und der Wurzelmetaklasse und auf dem Pfad zwischen dem zweiten Datenobjekt und der Wurzelmetaklasse befinden, dann ist die ermittelte Metaklasse jene Metaklasse dessen Abstand zur Wurzelmetaklasse maximal ist.

Vorteilhaft ist es, wenn

- bei der ersten Transformation Attributswerte der Attribute des ersten Datenobjektes in Attributswerte der Attribute des ersten Metaobjektes transformiert wird,
- bei der zweiten Transformation Attributswerte der Attribute des zweiten Datenobjektes in Attributswerte der Attribute des zweiten Metaobjektes transformiert wird, und
- bei der dritten Transformation

  - Attributswerte der Attribute des ersten Metaobjektes in Attributswerte der Attribute des ersten Datenobjektes und/oder

- Attributswerte der Attribute des zweiten Metaobjektes in Attributswerte der Attribute des zweiten Datenobjektes

transformiert werden.

Die erste Transformation und/oder die zweite Transformation und/oder die dritte Transformation können jeweils eine Anzahl von Teiltransformationen umfassen, wobei die Teiltransformationen einer Transformation hintereinander und in einer vorbestimmten Reihenfolge ausgeführt werden.

Eine Teiltransformation kann

- das erste Datenobjekt oder das zweite Datenobjekt in ein temporäres Metaobjekt, oder
- ein temporäres Metaobjekt in das erste Datenobjekt oder in das zweite Datenobjekt, oder
- ein temporäres Metaobjekt in das erste Metaobjekt oder in das zweite Metaobjekt, oder
- das erste Metaobjekt oder das zweite Metaobjekt in ein temporäres Metaobjekt transformieren, wobei das temporäre Metaobjekt einer Instanz einer Metaklasse entspricht, die sich auf dem Pfad zwischen dem ersten Datenobjekt und/oder zwischen dem zweiten Datenobjekt und der ermittelten Metaklasse befindet.

Bei der Synchronisation des ersten Metaobjektes mit dem zweiten Metaobjekt können Attributswerte der Attribute des ersten Metaobjektes auf Attributswerte der Attribute des zweiten Metaobjektes, oder umgekehrt, gemäß einer vorbestimmten Synchronisationsvorschrift abgebildet werden.

Jeder Transformation und/oder jeder Teiltransformation können zumindest eine Transformationsregel zugeordnet werden, die eine Abbildungsvorschrift umfasst, die angibt, wie die Attribute eines Datenobjektes, eines temporären Metaobjektes oder eines Metaobjektes auf die Attribute eines Datenobjektes, eines temporären Metaobjektes oder eines Metaobjektes abzubilden sind.

Zumindest eine Transformationsregel kann ein Gültigkeitskriterium umfasst, das angibt, ob die Transformationsregel für eine durchzuführende Transformation verwendet werden darf, wobei bei mehreren Transformationsregeln eine vorbestimmte Transformationsregel als Standard-Transformationsregel vorgesehen wird.

Die Standard-Transformationsregel wird vorzugsweise verwendet, wenn die anderen Transformationsregeln aufgrund ihres Gültigkeitskriteriums nicht verwendet werden dürfen.

Vorteilhaft ist es, wenn

- das erste Datenobjekt in einer ersten Speichereinrichtung gespeichert wird,
- das zweite Datenobjekt in der ersten Speichereinrichtung oder in einer zweiten Speichereinrichtung gespeichert wird,

wobei die beiden Speichereinrichtungen über ein Kommunikationsnetzwerk mit einer Datenverarbeitungseinrichtung koppelbar sind, und/oder

- die Synchronisation des ersten Datenobjektes mit dem zweiten Datenobjekt von der Datenverarbeitungseinrichtung durchgeführt wird, wobei die Baumstruktur der Metaklassen und die Transformationsregeln in der Datenverarbeitungseinrichtung verwaltet und gespeichert werden.

Die Datenobjekte können jeweils eine Kennung umfassen, die angibt, welcher Metaklasse das jeweilige Datenobjekt zugeordnet ist.

Vor der zweiten Transformation oder nach bzw. während der dritten Transformation kann das zweite Datenobjekt erzeugt und gespeichert werden, wenn das zweite Datenobjekt vor der Synchronisation nicht vorhanden ist.

Jedes Datenobjekt kann eine Instanz jener Metaklasse sein, der es zugeordnet ist.

Jede Metaklasse mit Ausnahme der Wurzelmetaklasse kann von genau einer in der Baumstruktur übergeordneten Metaklasse abgeleitet sein.

In einer Ausgestaltung der Erfindung kann es vorgesehen sein, dass die Datenobjekte zusammengesetzte Datenobjekte sind, wobei jedes zusammengesetzte Datenobjekt eine Anzahl von Datenobjekten umfasst, die in einer Beziehung zueinander stehen.

Vorteilhaft ist es, wenn in dem zusammengesetzten Datenobjekt ein vorbestimmtes Datenobjekt ein Master-Datenobjekt ist. Dadurch wird es möglich, ein Master-Datenobjekt eines zusammengesetzten Datenobjektes zu synchronisieren, wobei die mit dem Master-Datenobjekt in Beziehung stehenden weiteren Datenobjekte des zusammengesetzten Datenobjektes automatisch mit synchronisiert werden können.

In einer vorteilhaften Ausgestaltung der Erfindung werden bei einer Synchronisation eines Master-Datenobjektes bzw. eines zusammengesetzten Datenobjektes die Beziehungen der Datenobjekte zueinander bzw. des Master-Datenobjektes zu den weiteren Datenobjekten des zusammengesetzten Datenobjektes ebenfalls synchronisiert.

Vorteilhaft ist es hierbei, wenn die Transformationsregel bzw. Transformationsregeln auch eine Abbildungsvorschrift umfasst bzw. umfassen, die angibt bzw. angeben, wie das Master-Datenobjekt und die mit dem Master-Datenobjekt in Beziehung stehenden weiteren Datenobjekte des zusammengesetzten Datenobjektes in ein temporäres Master-Metaobjekt bzw. in ein temporäres zusammengesetztes Metaobjekt abzubilden sind.

Bei einem zusammengesetzten Datenobjekt kann es vorteilhaft sein, wenn

- in einem ersten Schritt die Datenobjekte des zusammengesetzten Datenobjektes unabhängig voneinander, vorzugsweise gemäß dem erfindungsgemäßen Synchronisationsverfahren synchronisiert werden, und

- in einem zweiten Schritt die Beziehungen der Datenobjekte zueinander synchronisiert werden.

Es hat sich als Vorteilhaft erwiesen, wenn die eine Beziehung zwischen zwei Datenobjekten eines zusammengesetzten Datenobjektes ebenfalls ein Datenobjekt ist. Dadurch wird es möglich auch die Beziehung zwischen zwei Datenobjekten gemäß dem erfindungsgemäßen Synchronisationsverfahren zu synchronisieren.

Bereitgestellt durch die Erfindung wird des Weiteren ein System zur Synchronisation eines ersten Datenobjektes mit zumindest einem zweiten Datenobjekt, wobei das System eine Datenverarbeitungseinrichtung umfasst, die angepasst ist, ein erfindungsgemäßes Verfahren auszuführen.

Die Datenverarbeitungseinrichtung kann über ein Kommunikationsnetzwerk mit zumindest einer Speichereinrichtung koppelbar sein, und angepasst sein, das erste Datenobjekt über das Kommunikationsnetzwerk von der Speichereinrichtung entgegenzunehmen und das zweite Datenobjekt, nachdem es mit dem ersten Datenobjekt synchronisiert worden ist, zur Übertragung über das Kommunikationsnetzwerk auf die Speichereinrichtung bereitzustellen.

Ferner wird durch die Erfindung ein Computerprogrammprodukt bereitgestellt, das in den Speicher einer Datenverarbeitungseinrichtung geladen werden kann und auf dieser zur Ausführung gebracht werden kann, und das Programmabschnitte umfasst, die angepasst sind, ein erfindungsgemäßes Verfahren zur Ausführung zu bringen.

Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:

Fig. 1    Datenobjekte, die gemäß einem aus dem Stand der Technik bekannten Synchronisationsverfahren zu synchronisieren sind;

Fig. 2    eine hierarchische Baumstruktur, zur Erläuterung des erfindungsgemäßen Synchronisationsverfahrens;

Fig. 3    einen Ausschnitt aus Fig. 4, mit dem ein Ausführungsbeispiel konkret beschrieben wird;

Fig. 4    einen Ausschnitt aus Fig. 2, mit dem ein Ausführungsbeispiel der Erfindung konkret beschrieben wird;

Fig. 5    eine alternative Lösung zu dem in Fig. 4 gezeigten Ausführungsbeispiel;

Fig. 6    ein Ausführungsbeispiel der Erfindung zur Synchronisation von zusammengesetzten Datenobjekten; und

Fig. 7    ein Ausführungsbeispiel eines erfindungsgemäßen Systems zur Synchronisation von Daten gemäß dem erfindungsgemäßen Synchronisationsverfahrens.

Detaillierte Beschreibung der Erfindung

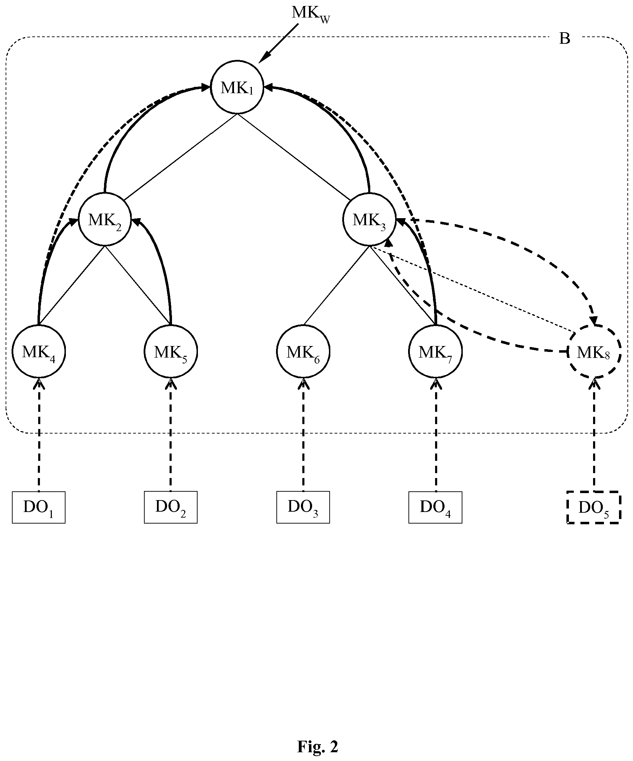

**Fig. 2** zeigt eine Datenstruktur und eine Anzahl von Datenobjekte anhand derer das erfindungsgemäße Synchronisationsverfahren erläutert wird.

Eine hierarchische Baumstruktur B umfasst eine Anzahl von Metaklassen $MK_1$ bis $MK_7$. Die hierarchische Baumstruktur B weist einen Wurzelknoten auf, der hier als Wurzelmetaklasse MKw bezeichnet wird. Die Metaklassen, mit Ausnahme der Wurzelmetaklasse, haben jeweils genau einen Vaterknoten bzw. eine Vatermetaklasse. Jede Metaklasse inklusive der Wurzelmetaklasse kann ein oder mehrere Söhne bzw. Sohnmetaklassen aufweisen.

Gemäß der vorliegenden Erfindung sind die Metaklassen jeweils von der dazugehörigen Vatermetaklasse abgeleitet, wobei die Wurzelmetaklasse MKw die Basisklasse bildet. Abgeleitet bedeutet, dass eine Metaklasse die Attribute der dazugehörigen Vatermetaklasse erbt. Beispielsweise erbt die Metaklasse $MK_2$ die Attribute der Wurzelmetaklasse $MK_1$ und die Metaklasse $MK_4$ erbt die Attribute der Metaklasse $MK_2$, wobei aufgrund der Vererbungshierarchie die Metaklasse $MK_4$ auch die Attribute der Wurzelmetaklasse $MK_1$ erbt. Jede Metaklasse, mit Ausnahme der Wurzelmetaklasse, $MK_1$ kann zusätzlich zu den geerbten Attributen zusätzliche Attribute umfassen, sodass eine abgeleitete Metaklasse in der Regel mehr Attribute aufweist, als die dazugehörige Vatermetaklasse.

In dem Beispiel gemäß Fig. 2 kann die Metaklasse $MK_1$ bzw. die Wurzelmetaklasse MKw eine Klasse für ein Basisterminobjekt sein. Das Basisterminobjekt kann beispielsweise die Attribute ID, Startzeit, Endzeit, Startdatum und Enddatum umfassen. D.h., dass alle von der Basisterminklasse direkt oder indirekt abgeleiteten Metaklassen diese fünf Attribute aufweisen.

Die von der Basisterminklasse $MK_1$ abgeleitete Terminklasse $MK_2$ kann beispielsweise das zusätzliche Attribut "Zeitzone" definieren, sodass die von der Terminklasse $MK_2$ abgeleiteten Terminklassen dieses zusätzliche Attribut ebenfalls aufweisen.

Die von der Basisterminklasse abgeleitete Terminklasse $MK_3$ kann beispielsweise das zusätzliche Attribut "Kategorie" aufweisen.

In der von der Terminklasse $MK_2$ abgeleiteten Terminklasse $MK_4$ kann das zusätzliche Attribut "Ort" definiert sein und in der von der Terminklasse $MK_2$ abgeleiteten Terminklasse $MK_5$ kann das zusätzliche Attribut "Betreff" definiert sein.

In dem in Fig. 2 gezeigten Beispiel ist den Blattknoten der Baumstruktur B bzw. den Metaklassen $MK_4$, $MK_5$, $MK_6$ und $MK_7$ jeweils ein Datenobjekt $DO_1$, $DO_2$, $DO_3$ bzw. $DO_4$ zugeordnet. Die Zuordnung der Datenobjekte $DO_1$ bis $DO_4$ zu der jeweiligen Metaklasse bedeutet, dass die Datenobjekte $DO_1$ bis $DO_4$ jeweils Instanzen der jeweiligen Metaklasse repräsentieren.

Erfindungsgemäß kann ein Datenobjekt aber auch einer anderen Metaklasse als den Blattmetaklassen zugeordnet sein. Beispielsweise kann ein Datenobjekt der Metaklasse $MK_2$ zugeordnet sein, d.h., dieses Datenobjekt würde eine Instanz der Metaklasse $MK_2$ repräsentieren. Das erfindungsgemäße Verfahren kann sowohl für Datenobjekte, die den Blattmetaklassen zugeordnet sind, als auch für Datenobjekte, die den anderen Metaklassen inklusive der Wurzelmetaklasse zugeordnet sind, durchgeführt werden.

Erfindungsgemäß werden zwei zu synchronisierende Datenobjekte entlang ihres Pfades zwischen der Metaklasse, der sie zugeordnet sind, und der Wurzelmetaklasse, wobei dieser Pfad für jedes Datenobjekt eindeutig ist, solange nach oben transformiert, bis eine Metaklasse erreicht wird, die beide Datenobjekte gemeinsam haben. Beispielsweise ist die erste gemeinsame Metaklasse der Datenobjekte $DO_1$ und $DO_2$ die Metaklasse $MK_2$. Die erste gemeinsame Metaklasse der Datenobjekte $DO_1$ und $DO_4$ ist die Metaklasse $MK_1$, die gleichzeitig auch die Wurzelmetaklasse ist.

In dem in Fig. 2 gezeigten Beispiel werden die zu synchronisierenden Datenobjekte $DO_1$ und $DO_2$ bis zur Metaklasse $MK_2$ transformiert. Die zu synchronisierenden Datenobjekte $DO_1$ und $DO_4$ werden bis zur Metaklasse $MK_1$ transformiert. Die Transformationen sind hier als durchgängige Pfeile gezeigt.

Für die Synchronisation der Datenobjekte $DO_1$ und $DO_4$ gibt es zwei Möglichkeiten die Transformationen bis zur Metaklasse $MK_1$ durchzuführen. Gemäß einer ersten Variante können die Datenobjekte $DO_1$ und $DO_4$ jeweils mit einer einzigen Transformation in die Metaklasse $MK_1$ transformiert werden. Diese Transformationen sind hier als gestrichelte Pfeile gezeigt. Alternativ kann auch eine mehrstufige Transformation durchgeführt werden, wobei die Datenobjekte $DO_1$ und $DO_4$ zunächst in die Metaklassen $MK_2$ bzw. $MK_3$ transformiert werden und anschließend die Metaklassen $MK_2$ und $MK_3$ in die Metaklasse $MK_1$ transformiert werden.

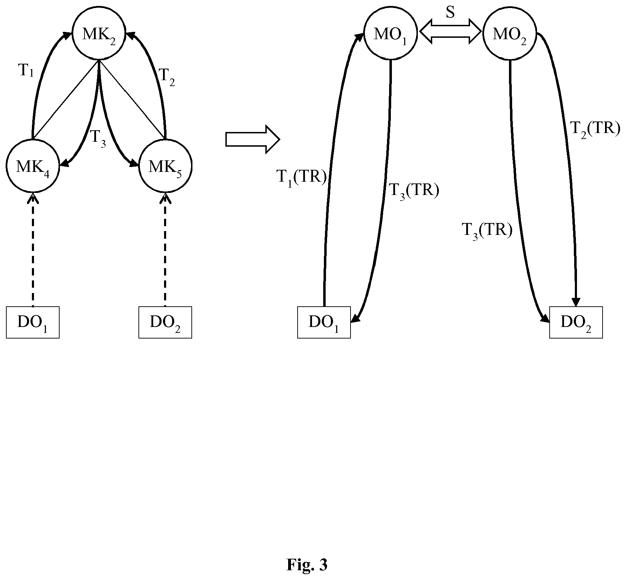

Nachdem die zu synchronisierenden Datenobjekte bis zur gemeinsamen Metaklasse transformiert worden sind, können sie dort synchronisiert werden, wie mit Bezug auf Fig. 3 bis Fig. 5 näher erläutert. Die Transformation der zu synchronisierenden Datenobjekte bis zu der gemeinsamen Metaklasse hat den Vorteil, dass die so transformierten Datenobjekte eine identische Datenstruktur aufweisen, sodass eine Synchronisation besonders einfach durchgeführt werden kann.

Nachdem die beiden transformierten Datenobjekte synchronisiert worden sind, können diese wieder nach unten transformiert werden und schließlich das jeweilige ursprüngliche Datenobjekt ersetzen. In dem in Fig. 2 gezeigten Beispiel werden die Datenobjekte $DO_1$ und $DO_2$ bis zur Metaklasse $MK_2$ transformiert. Die transformierten Datenobjekte werden dann synchronisiert und anschließend wieder nach unten transformiert, wobei die beiden synchronisierten Datenobjekte jeweils das entsprechende ursprüngliche Datenobjekt $DO_1$ bzw. $DO_2$ ersetzen bzw. überschreiben.

Mit diesem Verfahren kann auf Schnittstellen bzw. Adapter zwischen jeweils zwei Datenobjekten unterschiedlicher Datenstruktur und auf die dazugehörigen Abbildungsvorschriften bzw. Synchronisationsvorschriften verzichtet werden. Es müssen lediglich Transformationen in der Baumstruktur definiert werden, gemäß denen die Datenobjekte nach oben transformiert werden bzw. die synchronisierten Datenobjekte nach unten transformiert werden.

Deutlich wird der Vorteil des erfindungsgemäßen Verfahrens, wenn in dem in Fig. 2 gezeigten Beispiel ein zusätzliches Datenobjekt $DO_5$, welches einer Metaklasse $MK_8$ zugeordnet ist, die wiederum von der Metaklasse $MK_3$ abgeleitet ist, mit den Datenobjekten $DO_1$ bis $DO_4$ synchronisiert werden soll. In diesem Fall muss lediglich eine Transformation zur Metaklasse $MK_3$ und eine Transformation von der Metaklasse $MK_3$ zum Datenobjekt bzw. zur Metaklasse $MK_8$ definiert werden, während bei dem in Fig. 1 gezeigten Verfahren vier zusätzliche Schnittstellen und acht zusätzliche Abbildungsvorschriften definiert werden müssten. Für die Synchronisation des zusätzlichen Datenobjektes $DO_5$ mit beispielsweise dem Datenobjekt $DO_1$ kann zur Transformation des Datenobjektes $DO_5$ bis zur Metaklasse $MK_1$ die von der Metaklasse $MK_3$ zur Metaklasse $MK_1$ vorhandene Transformation wiederverwendet werden. Dasselbe gilt die Transformation des synchronisierten Datenobjektes von der Metaklasse $MK_1$ zur Metaklasse $MK_3$.

Der Vorteil des erfindungsgemäßen Verfahrens liegt demnach insbesondere darin, dass für jedes zusätzliche zu synchronisierende Datenobjekt, das eine andere Datenstruktur aufweist als die bereits vorhandenen zu synchronisierenden Daten lediglich eine zusätzliche Metaklasse definiert werden muss, von der das zusätzliche zu synchronisierende Datenobjekt instanziiert wird bzw. instanziiert ist, und die von einer bereits vorhandenen Metaklasse in der Baumstruktur B abgeleitet ist. Für das zusätzliche zu synchronisierende Datenobjekt müssen zudem lediglich zwei Transformationen definiert werden, nämlich von der neuen Metaklasse zur dazugehörigen Vatermetaklasse und von der dazugehörigen Vatermetaklasse zur neuen Metaklasse. Damit kann nun das neue Datenobjekt, beispielsweise das Datenobjekt $DO_5$, mit allen anderen Datenobjekten $DO_1$ bis $DO_4$ synchronisiert werden. Die geringe Anzahl von Transformationen führt zudem dazu, dass der Pflegeaufwand minimiert wird und neue Datenobjekte bzw. die dazugehörigen Metaklassen besonders einfach und schnell in die vorhandene Baumstruktur B eingefügt werden können.

**Fig. 3** zeigt einen Ausschnitt der in Fig. 2 gezeigten hierarchischen Baumstruktur, mit dem die Synchronisation der beiden Datenobjekte $DO_1$ und $DO_2$ verdeutlicht werden soll.

Das Datenobjekt $DO_1$ ist eine Instanz der Metaklasse $MK_4$. Das Datenobjekt $DO_2$ ist eine Instanz der Metaklasse $MK_5$. Die Metaklasse $MK_4$ und die Metaklasse $MK_5$ sind jeweils von der Metaklasse $MK_2$ abgeleitet, d.h., die Metaklasse $MK_2$ ist die gemeinsame übergeordnete Metaklasse der beiden Metaklassen $MK_4$ und $MK_5$. Wie mit Bezug auf Fig. 2 erläutert, werden die Datenobjekte $DO_1$ und $DO_2$ jeweils in die Metaklasse $MK_2$ transformiert. Für die Transformation des Datenobjektes $DO_1$ ist die Transformation $T_1$ und für die Transformation des Datenobjektes $DO_2$ ist die Transformation $T_2$ vorgesehen.

Um die beiden Datenobjekte $DO_1$ und $DO_2$ zu transformieren, werden zunächst zwei Metaobjekte $MO_1$ und $MO_2$ erzeugt. Die Metaobjekte $MO_1$ und $MO_2$ sind hierbei Instanzen der Metaklasse $MK_2$. Mit Hilfe einer ersten Transformation $T_1$ wird das Datenobjekt $DO_1$ in das erste Metaobjekt $MO_1$ transformiert. Mit Hilfe einer zweiten Transformation $T_2$ wird das Datenobjekt $DO_2$ in das zweite Metaobjekt $MO_2$ transformiert. Beide Transformationen werden jeweils gemäß einer Transformationsregel durchgeführt, die jeweils angeben, welche Attribute des jeweiligen Datenobjektes in welche Attribute des jeweiligen Metaobjektes zu transformieren sind.

Die transformierten Datenobjekte $DO_1$ und $DO_2$ bzw. die Metaobjekte $MO_1$ und $MO_2$ weisen eine identische Datenstruktur auf, denn die Metaobjekte $MO_1$ und $MO_2$ sind jeweils Instanzen der Metaklasse $MK_2$. Weil die transformierten Datenobjekte $DO_1$ und $DO_2$ bzw. die Metaobjekte $MO_1$ und $MO_2$ die gleiche Datenstruktur aufweisen, können die Metaobjekte $MO_1$ und $MO_2$ gemäß einer Synchronisationsvorschrift S synchronisiert werden, auch wenn die ursprünglichen Datenobjekte $DO_1$ und $DO_2$ unterschiedliche Attribute aufweisen. Für die jeweiligen unterschiedlichen Attribute müssen in der Synchronisationsvorschrift S keine Ausnahmebehandlungen vorgesehen werden, weil die unterschiedlichen Attribute gemäß der ersten Transformation $T_1$ und der zweiten Transformation $T_2$ in Attribute der Metaobjekte $MO_1$ bzw. $MO_2$ transformiert worden sind.

Nach erfolgreicher Synchronisation S der beiden Metaobjekte $MO_1$ und $MO_2$ werden diese in einer dritten Transformation $T_3$ jeweils in das erste Datenobjekt $DO_1$ bzw. $DO_2$ transformiert. Die dritte Transformation $T_3$ wird wiederum gemäß einer Transformationsregel durchgeführt, die angibt, welche Attribute eines Metaobjektes in welche Attribute eines Datenobjektes zu transformieren sind. Nach Abschluss der dritten Transformation $T_3$ sind die Datenobjekte $DO_1$ und $DO_2$ synchronisiert.

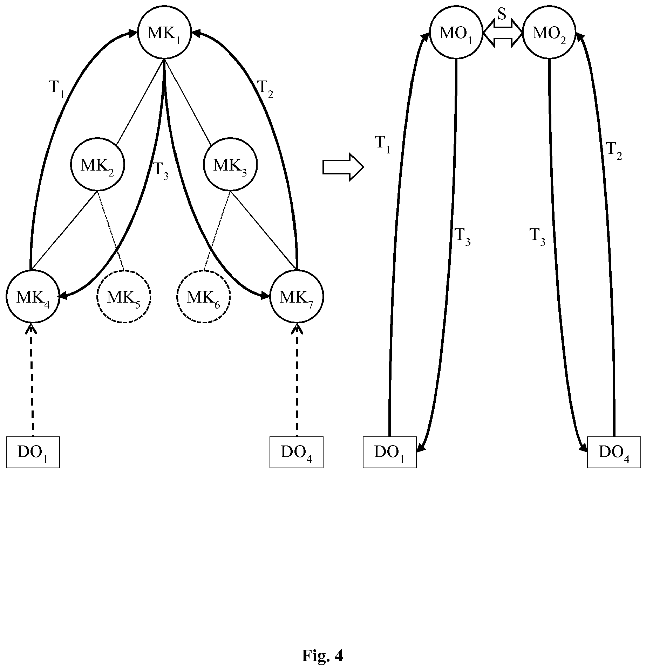

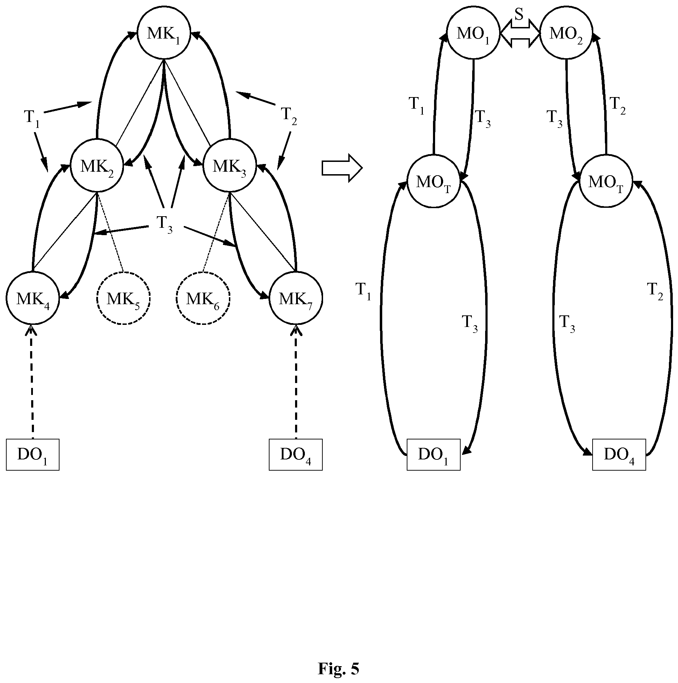

Mit Bezug auf Fig. 2 und Fig. 3 sowie nachfolgend mit Bezug auf Fig. 4 und Fig. 5 ist ein Verfahren beschrieben, bei dem für die erste, die zweite und die dritte Transformation jeweils eine Transformationsregel vorgesehen ist, gemäß der die Transformation durchgeführt wird.

In einer Ausgestaltung der Erfindung können jeder Transformation mehrere Transformationsregeln zugeordnet sein. Beispielsweise können der in Fig. 3 gezeigten ersten Transformation $T_1$ mehrere Transformationsregeln TR zugeordnet sein. Erfindungsgemäß wird dann beim Durchführen der ersten Transformation $T_1$ eine der der Transformation $T_1$ zugeordneten Transformationsregeln ausgewählt gemäß der die Transformation durchgeführt wird. Damit kann beispielsweise in Abhängigkeit eines bestimmten Attributwertes des ersten Datenobjektes $DO_1$ eine bestimmte Transformationsregel ausgewählt werden. Hat beispielsweise das Attribut "Ort" des ersten Datenobjektes $DO_1$ einen bestimmten Wert, kann eine erste Transformationsregel ausgewählt werden, während bei einem anderen Wert des Attributes "Ort" eine andere Transformationsregel ausgewählt werden kann.

Hierzu kann jede Transformationsregel ein Gültigkeitskriterium umfassen, welches angibt, unter welchen Voraussetzungen eine bestimmte Transformationsregel angewandt werden darf. Beispielsweise kann eine Transformationsregel ein Gültigkeitskriterium umfassen, das angibt, dass die entsprechende Transformationsregel nur dann angewandt werden darf, wenn ein bestimmtes Attribut des Datenobjektes einen bestimmten Wert aufweist. Sind mehrere Transformationsregel einer Transformation zugeordnet, kann es vorteilhaft sein, wenn eine vorbestimmte Transformationsregel als Standard-Transformationsregel vorgesehen wird, die dann angewandt wird, wenn die Gültigkeitskriterien der anderen Transformationsregeln nicht erfüllt werden.

**Fig. 4** zeigt einen Ausschnitt der in Fig. 2 gezeigten hierarchischen Baumstruktur, zur Verdeutlichung der Synchronisation der Datenobjekte $DO_1$ und $DO_4$.

Das Datenobjekt $DO_1$ ist eine Instanz der Metaklasse $MK_4$. Das Datenobjekt $DO_4$ ist eine Instanz der Metaklasse $MK_7$. Wie mit Bezug auf Fig. 2 erläutert, ist die Metaklasse $MK_1$ die gemeinsame Metaklasse, von der die Metaklassen $MK_4$ und $MK_7$ abgeleitet sind. Demzufolge werden die Datenobjekte $DO_1$ und $DO_4$ erfindungsgemäß in die Metaklasse $MK_1$ transformiert. Hierzu werden zwei Instanzen $MO_1$ und $MO_2$ der Metaklasse $MK_1$ angelegt. In einer ersten Transformation $T_1$ wird dann das Datenobjekt $DO_1$ in das Metaobjekt $MO_1$ transformiert. In einer zweiten Transformation $T_2$ wird das Datenobjekt $DO_4$ in das zweite Metaobjekt $MO_2$ transformiert. Nach erfolgreicher Transformation der beiden Datenobjekte werden die zwei Metaobjekte $MO_1$ und $MO_2$ gemäß einer Synchronisierungsvorschrift S synchronisiert. Nach erfolgreicher Synchronisation der Metaobjekte $MO_1$ und $MO_2$ werden diese in einer dritten Transformation $T_3$ jeweils wieder in die Datenobjekte $DO_1$ bzw. $DO_4$ transformiert, sodass die Datenobjekte $DO_1$ und

DO$_4$ synchronisiert sind.

**Fig. 5** zeigt eine alternative erfindungsgemäße Vorgehensweise zur Synchronisation der Datenobjekte DO$_1$ und DO$_4$ aus Fig. 4.

Im Unterschied zu dem in Fig. 4 gezeigten Beispiel werden die beiden Datenobjekte DO$_1$ und DO$_4$ nicht direkt mittels der Transformationen T$_1$ und T$_2$ in die Metaklasse MK$_1$ transformiert bzw. nicht direkt von der Metaklasse MK$_1$ zu den Datenobjekten DO$_1$ bzw. DO$_4$.

In dem hier gezeigten Beispiel umfassen die Transformationen T$_1$, T$_2$ und T$_3$ jeweils zwei Teiltransformationen.

In einem ersten Schritt werden zu den Metaklassen MK$_2$ und MK$_3$, die jeweils in dem Pfad zwischen der Metaklasse MK$_4$ und der Metaklasse MK$_1$ bzw. zwischen der Metaklasse MK$_7$ und der Metaklasse MK$_1$ liegen, ein temporäres Metaobjekt MO$_T$ erzeugt.

In einer ersten Teiltransformation der Transformation T$_1$ wird das Datenobjekt DO$_1$ in das der Metaklasse MK$_2$ zugehörige temporäre Metaobjekt MO$_T$ transformiert. Anschließend wird das temporäre Metaobjekt MO$_T$ in einer zweiten Teiltransformation der ersten Transformation T$_1$ in das erste Metaobjekt MO$_1$ transformiert.

Das zweite Datenobjekt DO$_4$ wird mit einer ersten Teiltransformation der zweiten Transformation T$_2$ in das der Metaklasse MK$_3$ zugehörige temporäre Metaobjekt MO$_T$ transformiert. Anschließend wird das zweite temporäre Metaobjekt MO$_T$ in das Metaobjekt MO$_2$ transformiert.

Die beiden Metaobjekte MO$_1$ und MO$_2$ sind hierbei wiederum Instanzen der Metaklasse MK$_1$. Die so jeweils mittels zweier Teiltransformationen transformierten Datenobjekte bzw. die Metaobjekte MO$_1$ und MO$_2$ werden dann gemäß einer Synchronisationsvorschrift S synchronisiert. Die nun synchronisierten Metaobjekte MO$_1$ und MO$_2$ werden anschließend jeweils mittels zweier Teiltransformationen in das jeweilige temporäre Metaobjekt MO$_T$ und dann in das jeweilige Datenobjekt DO$_1$ bzw. DO$_4$ transformiert, sodass die Datenobjekte DO$_1$ und DO$_4$ synchronisiert sind.

Den Teiltransformationen können hierbei ebenfalls jeweils eine Anzahl von Transformationsregeln zugeordnet sein, die jeweils ein Gültigkeitskriterium umfassen können und von denen jeweils eine Transformationsregel als Standard-Transformationsregel vorgesehen ist.

Mit Bezug auf Fig. 2 bis Fig. 5 ist das erfindungsgemäße Synchronisationsverfahren für die Synchronisation von "einfachen" Datenobjekten beschrieben worden. Das erfindungsgemäße Synchronisationsverfahren kann aber auch für die Synchronisation von zusammengesetzten (komplexen) Datenobjekten verwendet werden.

Ein zusammengesetztes Datenobjekt besteht auch mehreren bzw. umfasst mehrere (einfache) Datenobjekte, die in einer Beziehung zueinander stehen. Ein Beispiel hierfür ist das zusammengesetzte Datenobjekt "Patentakte", das aus dem Datenobjekt "Akte", dem Datenobjekt "Dokumente" und dem Datenobjekt "Erfinder" besteht. Das Datenobjekt "Akte" kann hierbei das sogenannte Master-Datenobjekt sein und die Datenobjekte "Dokumente" und "Erfinder" stehen in einer Beziehung zu dem Datenobjekt "Akte". Die Beziehung kann beispielsweise eine 1:1 oder eine 1:n oder eine n:m-Relation sein.

Bei der Synchronisation von solchen zusammengesetzten Datenobjekten werden die zu dem zusammengesetzten Datenobjekt gehörenden Datenobjekte synchronisiert. Ferner werden auch die Beziehung synchronisiert, denn die Referenzen von z.B. dem Master-Datenobjekt auf ein anderes Datenobjekt können sich ändern, wenn etwa das referenzierte Datenobjekt in dem Zielsystem eine andere eindeutige Kennung erhält.

Die Synchronisation eines zusammengesetzten Datenobjektes bzw. der Datenobjekte eines zusammengesetzten Datenobjektes kann gemäß dem vorstehend beschriebenen erfindungsgemäßen Verfahren durchgeführt werden.

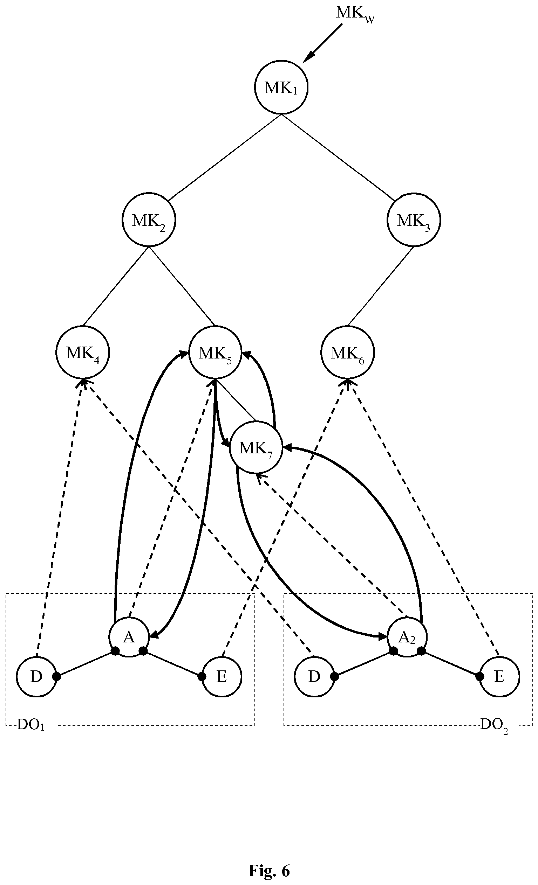

**Fig. 6** zeigt ein Ausführungsbeispiel eines erfindungsgemäßen Synchronisationsverfahrens, mit dem zusammengesetzte Datenobjekte synchronisiert werden können. Das erste zusammengesetzte Objekt DO$_1$ besteht aus den Datenobjekten A, E und D, wobei das Datenobjekt A in einer M:N-Beziehung zu dem Datenobjekt E und zu dem Datenobjekt D steht. Das Datenobjekt A ist der Metaklasse MK$_5$, das Datenobjekt D des ersten zusammengesetzten Datenobjektes DO$_1$ ist der Metaklasse MK$_4$ und das Datenobjekt E des ersten zusammengesetzten Datenobjektes DO$_1$ ist der Metaklasse MK$_6$ zugeordnet.

Das zweite zusammengesetzte Datenobjekt DO$_2$ besteht aus den Klassen A$_2$, D und E, wobei zwischen den Datenobjekten A$_2$ und dem Datenobjekt E bzw. D jeweils eine M:N-Beziehung besteht. Das Datenobjekt A$_2$ ist der Metaklasse MK$_7$ zugeordnet, wobei die Metaklasse MK$_7$ von der Metaklasse MK$_5$ direkt abgeleitet ist. Das Datenobjekt D des zweiten zusammengesetzten Datenobjektes DO$_2$ ist der Metaklasse MK$_4$ und das Datenobjekt E des zweiten zusammengesetzten Datenobjektes DO$_2$ ist der Metaklasse MK$_6$ zugeordnet.

Obwohl die beiden zusammengesetzten Datenobjekte DO$_1$ und DO$_2$ jeweils mehrere Datenobjekte umfassen, die jeweils unterschiedlichen Metaklassen zugeordnet sind, ist es mit dem erfindungsgemäßen Synchronisationsverfahren möglich, die beiden zusammengesetzten Datenobjekte DO$_1$ und DO$_2$ miteinander zu synchronisieren.

Bei dem in Fig. 6 gezeigten Beispiel bildet die Metaklasse MK$_5$ die erste gemeinsame Metaklasse der beiden Datenobjekte A und A$_2$ entlang des Pfades zwischen den Datenobjekten nach oben zur Wurzelmetaklasse MK$_1$. Wie mit Bezug auf Fig. 3 bis Fig. 5 erläutert, können die beiden Datenobjekte A und A$_2$ synchronisiert werden. Hierzu werden von der Metaklasse MK$_5$ zwei Metaobjekte instanziert, wobei das Datenobjekt A des

ersten zusammengesetzten Datenobjektes DO$_1$ zum ersten Metaobjekt transformiert wird und das Datenobjekt A$_2$ des zweiten zusammengesetzten Datenobjektes DO$_2$ zum zweiten Metaobjekt transformiert wird, wie in Fig. 6 anhand der nach oben gerichteten durchgängigen Pfeile gezeigt. Die beiden Metaobjekte der Metaklasse MK$_5$ können dann wie vorstehend beschrieben synchronisiert werden und anschließend wieder zu den entsprechenden Datenobjekten A bzw. A$_2$ nach unten transformiert werden, wie in Fig. 6 anhand der nach unten gerichteten durchgängigen Pfeile gezeigt.

Die Datenobjekte A und A$_2$ der beiden zusammengesetzten Datenobjekte DO$_1$ und DO$_2$ sind damit fertig synchronisiert.

In einem nächsten Schritt können auch die restlichen Datenobjekte der beiden zusammengesetzten Datenobjekte DO$_1$ und DO$_2$ synchronisiert werden. Der besseren Übersicht halber sind in Fig. 6 die entsprechenden Transformationen zu den entsprechenden Metaklassen MK$_4$ bzw. MK$_6$ und die entsprechenden Transformationen von den Metaklassen MK$_4$ bzw. MK$_6$ zu den Datenobjekten D bzw. E nicht dargestellt. Dennoch werden die Instanzen D und E der beiden Datenobjekte DO$_2$ jeweils zu entsprechenden Metaobjekten der beiden Metaklassen MK$_6$ und MK$_7$ transformiert. Anschließend werden die so erzeugten Metaobjekte der Metaklassen MK$_4$ und MK$_6$ synchronisiert und anschließend wieder zu den jeweiligen Datenobjekten D bzw. E nach unten transformiert, wie beispielsweise mit Bezug auf Fig. 3 gezeigt.

Damit sind nun auch die Datenobjekte D und E der beiden zusammengesetzten Datenobjekte DO$_1$ und DO$_2$ synchronisiert.

In einem weiteren Schritt, der nur bei Bedarf und optional durchgeführt wird, können auch die Beziehungen zwischen den Datenobjekten der jeweiligen zusammengesetzten Datenobjekte DO$_1$ und DO$_2$ synchronisiert werden. Dies ist beispielsweise dann notwendig, wenn bei dem in Fig. 6 gezeigten Beispiel das Datenobjekt D des ersten zusammengesetzten Datenobjektes DO$_1$ einen neuen Primärschlüssel erhalten hat, anhand dessen die Verknüpfung zu dem Datenobjekt A hergestellt wird. Nach der Synchronisation der Datenobjekte der beiden zusammengesetzten Datenobjekte DO$_1$ und DO$_2$ wäre dann die in dem zweiten Datenobjekte DO$_2$ vorhandene Verknüpfung zwischen dem Datenobjekt D und dem Datenobjekt A$_2$ ungültig. Wenn nun auch die Verknüpfungen bzw. Beziehungen zwischen den Datenobjekten eines zusammengesetzten Datenobjektes synchronisiert werden, sind auch in dem synchronisierten Datenobjekt die Beziehungen bzw. Verknüpfungen wieder gültig.

Die Synchronisation der Beziehungen bzw. Verknüpfungen zwischen Datenobjekten von zusammengesetzten Datenobjekten kann erfindungsgemäß dadurch erfolgen, dass auch für die Verknüpfungen, sofern es sich hierbei um N:N-Verknüpfungen handelt, entsprechende Metaklassen in der Hierarchie von Metaklassen vorgesehen werden. Analog zu den vorstehend beschriebenen Beispielen können auch diese Verknüpfungen mittels entsprechender Transformationen synchronisiert werden. Damit müssen auch für die Synchronisation von zusammengesetzten Datenobjekten keine Schnittstellen bzw. Abbildungsvorschriften zwischen einzelnen zu synchronisierenden Datenobjekten bereitgestellt bzw. implementiert werden.

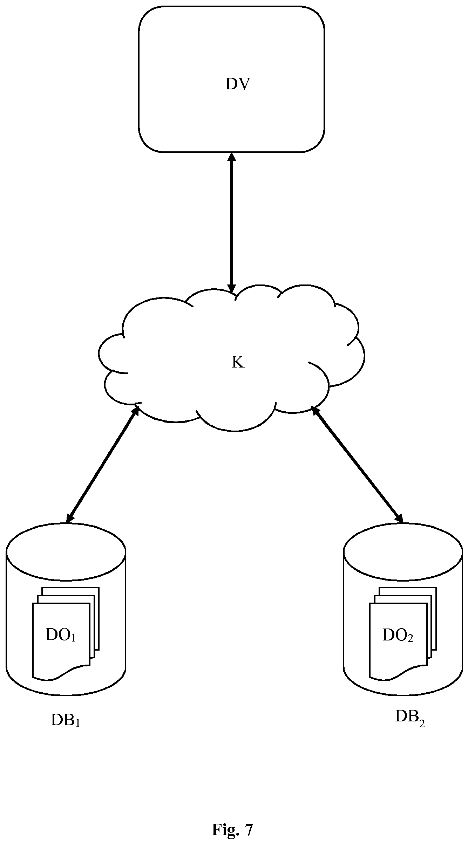

Fig. 7 zeigt ein Beispiel eines erfindungsgemäßen Systems zur Synchronisation von Datenobjekten. Das System umfasst eine Datenverarbeitungseinrichtung DV, die über ein Kommunikationsnetzwerk K, etwa das Internet, mit einer Anzahl von Speichereinrichtungen, etwa eines Computers oder eines Smartphones, gekoppelt sind. In den Speichereinrichtungen DB$_1$ und DB$_2$ können jeweils eine Anzahl von Datenobjekten gespeichert sein, wobei die Datenobjekte jeweils Instanzen unterschiedlicher Metaklassen sein können.

Die vorstehend genannte hierarchische Baumstruktur wird in der Datenverarbeitungseinrichtung DV hinterlegt und dort gegebenenfalls gepflegt. Die in den Speichereinrichtungen DB$_1$ und DB$_2$ gespeicherten Datenobjekte umfassen jeweils eine Kennung, die angibt, welcher Metaklasse der in der Datenverarbeitungseinrichtung DV gespeicherten hierarchischen Baumstruktur das Datenobjekt zugeordnet ist. Zur Synchronisation der in der ersten Speichereinrichtung DB$_1$ gespeicherten Datenobjekte mit den in der zweiten Speichereinrichtung DB$_2$ gespeicherten Datenobjekte werden diese gemäß dem vorstehend beschriebenen Verfahren in Metaobjekte transformiert, die Metaobjekte synchronisiert und die synchronisierten Metaobjekte in die jeweiligen Datenobjekte zurücktransformiert. Die zu transformierenden Datenobjekte können hierbei über das Kommunikationsnetzwerk K an die Datenverarbeitungseinrichtung DV übertragen werden, wo die Synchronisation abgewickelt wird, und die synchronisierten Datenobjekte können dann wiederum über das Kommunikationsnetzwerk in den entsprechenden Speichereinrichtungen gespeichert werden.

Werden einer Speichereinrichtung neue Datenobjekte hinzugefügt, die Instanzen einer Metaklasse repräsentieren, die noch nicht Bestandteil der hierarchischen Baumstruktur ist, müssen für diese zusätzliche Metaklasse lediglich zwei Transformationen definiert werden, um die Instanzen dieser neuen Metaklasse mit allen anderen Datenobjekten synchronisieren zu können. Vorteilhaft ist hierbei, dass zur Definition der beiden Transformationen lediglich Kenntnis über die Datenstruktur der übergeordneten Metaklasse notwendig ist (beispielsweise ist bei dem in Fig. 2 gezeigten Beispiel für die Transformation der neu hinzukommenden Metaklasse MK$_8$ nur Kenntnis über die Datenstruktur der Metaklasse MK$_3$ notwendig, um die beiden Transformationen zwischen MK$_8$ und MK$_3$ zu definieren). Der Aufbau und die Datenstruktur der übrigen Metaklassen in der hierarchischen Baumstruktur müssen hierzu nicht bekannt sein.

Bei der Datenverarbeitungseinrichtung DV kann es sich beispielsweise um eine in der Cloud angeordnete Servereinrichtung handeln.

Für die Ausführung des erfindungsgemäßen Verfahrens kann ein Prozessor bzw. Mikroprozessor vorgesehen sein, der angepasst ist, in einer Baumstruktur eine Metaklasse zu ermitteln, die die gemeinsame Metaklasse der zu synchronisierenden Datenobjekte ist. Ferner ist der Prozessor bzw. Mikroprozessor angepasst, aus der ermittelten Metaklasse zwei Metaobjekte zu erzeugen und entsprechende Transformationen der Datenobjekte zu den Metaobjekten bzw. von den Metaobjekten zu den Datenobjekten, wie vorstehend beschrieben, durchzuführen. Die Definition der Baumstruktur der Metaklassen kann beispielsweise in einer externen Datei, etwa in einem Dateisystem oder in einer Datenbank gespeichert sein, wobei der Mikroprozessor auf diese Definition der Baumstruktur Zugriff hat und im Rahmen einer Synchronisation darauf zugreift. Die zu synchronisierenden Datenobjekte können auf unterschiedlichen Systemen, beispielsweise unterschiedlichen Rechnern gespeichert sein. Der Mikroprozessor ist hierbei so ausgestaltet, dass er zu den jeweiligen Rechnersystemen eine Kommunikationsverbindung, etwa über das Internet, herstellen kann, um die dort gespeicherten Datenobjekte in einen Arbeitsspeicher des Mikroprozessors laden zu können und anschließend die geladenen Datenobjekte in die entsprechenden Metaobjekte transformieren zu können. Die synchronisierten Metaobjekte werden dann wiederum über die Kommunikationsverbindung an die entsprechenden Rechnersysteme übertragen und dort gespeichert.

Bezugszeichenliste:

| | |
|---|---|
| A, $A_2$ | Datenobjekt |
| B | Baumstruktur (hierarchisch) |
| D | Datenobjekt |
| $DB_1$, $DB_2$ | Speichereinrichtungen |
| $DO_1$ bis $DO_n$ | Datenobjekte bzw. zusammengesetzte Datenobjekte |
| DV | Datenverarbeitungseinrichtung, z.B. eine Servereinrichtung in der Cloud |
| E | Datenobjekt |
| K | Kommunikationsnetzwerk |
| $MK_1$ bis $MK_n$ | Metaklassen in der Baumstruktur B |
| $MK_W$ | Wurzelmetaklasse in der Baumstruktur B |
| $MO_1$, $MO_2$ | erstes und zweites Metaobjekt (Instanzen einer Metaklasse) |
| $MO_T$ | temporäres Metaobjekt (Instanz einer Metaklasse) |
| S | Synchronisierung |
| TR | Transformationsregeln |
| $T_1$ bis $T_n$ | Transformationen zwischen Datenobjekte und Metaobjekte bzw. zwischen |

Metaobjekte und Datenobjekte

**Patentansprüche**

1. Computer-implementiertes Verfahren zur Synchronisation eines ersten Datenobjektes ($DO_1$) mit zumindest einem zweiten Datenobjekt ($DO_2$), wobei jedes Datenobjekt ($DO_1$; $DO_2$) eine Anzahl von Attribute n umfasst, wobei das Verfahren auf einem Prozessor ausgeführt wird, **dadurch gekennzeichnet, dass**

    - jedes Datenobjekt ($DO_1$; $DO_2$) einer Metaklasse aus einer Anzahl von Metaklassen ($MK_1$ bis $MK_n$) zugeordnet wird, wobei die Metaklassen in einer Baumstruktur (B) mit einer Wurzelmetaklasse (MKw) organisiert werden, und wobei die Metaklassen jeweils eine Anzahl von Attribute n umfassen;
    - in der Baumstruktur eine Metaklasse ermittelt wird, die sich auf dem Pfad zwischen dem ersten Datenobjekt ($DO_1$) und der Wurzelmetaklasse (MKw) und auf dem Pfad zwischen dem zweiten Datenobjekt ($DO_2$) und der Wurzelmetaklasse (MKw) befindet,
    - aus der ermittelten Metaklasse ein erstes Metaobjekt ($MO_1$) und ein zweites Metaobjekt ($MO_2$) erzeugt werden;
    - eine erste Transformation ($T_1$) durchgeführt wird, bei der das erste Datenobjekt ($DO_1$) in das erste Metaobjekt ($MO_1$) transformiert wird;
    - eine zweite Transformation ($T_2$) durchgeführt wird, bei der das zweite Datenobjekt ($DO_2$) in das zweite Metaobjekt ($MO_2$) transformiert wird;
    - das erste Metaobjekt ($MO_1$) und das zweite Metaobjekt ($MO_2$) synchronisiert (S) werden; und
    - eine dritte Transformation ($T_3$) durchgeführt wird, wobei das erste Metaobjekt ($MO_1$) in das erste Datenobjekt ($DO_1$) transformiert wird und/oder das zweite Metaobjekt ($MO_2$) in das zweite Datenobjekt ($DO_2$) transformiert wird.

2. Verfahren nach Anspruch 1, **dadurch gekennzeichnet, dass** die ermittelte Metaklasse jene Metaklasse ist, die sich auf dem Pfad zwischen dem ersten Datenobjekt ($DO_1$) und der Wurzelmetaklasse (MKw) und/oder zwischen dem zweiten Datenobjekt ($DO_2$) und der Wurzelmetaklasse (MKw) in der Hierarchie der Baumstruktur (B) am weitesten unten befindet.

3. Verfahren nach einem der vorhergehenden Ansprüche, **dadurch gekennzeichnet, dass**

    - bei der ersten Transformation ($T_1$) Attributswerte der Attribute des ersten Datenobjektes

$(DO_1)$ in Attributswerte der Attribute des ersten Metaobjektes $(MO_1)$ transformiert wird,

- bei der zweiten Transformation $(T_2)$ Attributswerte der Attribute des zweiten Datenobjektes $(DO_2)$ in Attributswerte der Attribute des zweiten Metaobjektes $(MO_2)$ transformiert wird, und
- bei der dritten Transformation $(T_3)$

    - Attributswerte der Attribute des ersten Metaobjektes $(MO_1)$ in Attributswerte der Attribute des ersten Datenobjektes $(DO_1)$ und/oder
    - Attributswerte der Attribute des zweiten Metaobjektes $(MO_2)$ in Attributswerte der Attribute des zweiten Datenobjektes $(DO_2)$ transformiert werden.

4. Verfahren nach einem der vorhergehenden Ansprüche, **dadurch gekennzeichnet, dass** die erste Transformation $(T_1)$ und/oder die zweite Transformation $(T_2)$ und/oder die dritte Transformation $(T_3)$ jeweils eine Anzahl von Teiltransformationen umfasst, wobei die Teiltransformationen einer Transformation $(T_1, T_2, T_3)$ hintereinander und in einer vorbestimmten Reihenfolge ausgeführt werden.

5. Verfahren nach Anspruch 4, **dadurch gekennzeichnet, dass** eine Teiltransformation

    - das erste Datenobjekt $(DO_1)$ oder das zweite Datenobjekt $(DO_2)$ in ein temporäres Metaobjekt $(MO_T)$, oder
    - ein temporäres Metaobjekt $(MO_T)$ in das erste Datenobjekt $(DO_1)$ oder in das zweite Datenobjekt $(DO_2)$, oder
    - ein temporäres Metaobjekt $(MO_T)$ in das erste Metaobjekt $(MO_1)$ oder in das zweite Metaobjekt $(MO_2)$, oder
    - das erste Metaobjekt $(MO_1)$ oder das zweite Metaobjekt $(MO_2)$ in ein temporäres Metaobjekt $(MO_T)$

transformiert, wobei das temporäre Metaobjekt $(MO_T)$ einer Instanz einer Metaklasse entspricht, die sich auf dem Pfad zwischen dem ersten Datenobjekt $(DO_1)$ und der ermittelten Metaklasse und/oder zwischen dem zweiten Datenobjekt $(DO_2)$ und der ermittelten Metaklasse befindet.

6. Verfahren nach einem der vorhergehenden Ansprüche, **dadurch gekennzeichnet, dass** bei der Synchronisation (S) des ersten Metaobjektes $(MO_1)$ mit dem zweiten Metaobjekt $(MO_2)$ Attributswerte der Attribute des ersten Metaobjektes $(MO_1)$ auf Attributswerte der Attribute des zweiten Metaobjektes $(MO_2)$, oder umgekehrt, gemäß einer vorbestimmten Synchronisationsvorschrift abgebildet werden.

7. Verfahren nach Anspruch 4 oder 5, **dadurch gekennzeichnet, dass** jeder Transformation $(T_1, T_2, T_3)$ und/oder jeder Teiltransformation zumindest eine Transformationsregel (TR) zugeordnet wird, die eine Abbildungsvorschrift umfasst, die angibt, wie die Attribute eines Datenobjektes $(DO_1, DO_2)$, eines temporären Metaobjektes oder eines Metaobjektes $(MO_1, MO_2)$ auf die Attribute eines Datenobjektes $(DO_1, DO_2)$, eines temporären Metaobjektes oder eines Metaobjektes $(MO_1, MO_2)$ abzubilden sind.

8. Verfahren nach einem der vorhergehenden Ansprüche, **dadurch gekennzeichnet, dass** die Datenobjekte $(DO_1, DO_2)$ jeweils eine Kennung umfassen, die angibt, welcher Metaklasse $(MK_1$ bis $MK_n)$ das jeweilige Datenobjekt zugeordnet ist.

9. Verfahren nach einem der vorhergehenden Ansprüche, **dadurch gekennzeichnet, dass** vor der zweiten Transformation (T2) oder nach bzw. während der dritten Transformation $(T_3)$ das zweite Datenobjekt $(DO_2)$ erzeugt und gespeichert wird, wenn das zweite Datenobjekt vor der Synchronisation nicht vorhanden ist.

10. Verfahren nach einem der vorhergehenden Ansprüche, **dadurch gekennzeichnet, dass** die Datenobjekte $(DO_1; DO_2)$ zusammengesetzte Datenobjekte sind, wobei jedes zusammengesetzte Datenobjekt eine Anzahl von Datenobjekte umfasst, die in einer Beziehung zueinander stehen, wobei in dem zusammengesetzten Datenobjekt ein vorbestimmtes Datenobjekt ein Master-Datenobjekt ist, wobei die Master-Datenobjekte der zu synchronisierenden zusammengesetzten Datenobjekte synchronisiert werden, wobei die mit den Master-Datenobjekten in Beziehung stehenden weiteren Datenobjekte des zusammengesetzten Datenobjektes automatisch mitsynchronisiert werden und wobei bei der Synchronisation der zusammengesetzten Datenobjekte die Beziehungen der Datenobjekte der zusammengesetzten Datenobjekte zueinander ebenfalls synchronisiert werden.

11. Verfahren nach dem vorhergehenden Anspruch, **dadurch gekennzeichnet, dass** die Transformationsregel bzw. Transformationsregeln auch eine Abbildungsvorschrift umfasst bzw. umfassen, die angibt bzw. angeben, wie das Master-Datenobjekt und die mit dem Master-Datenobjekt in Beziehung stehenden weiteren Datenobjekte des zusammengesetzten Datenobjektes in ein temporäres Master-Metaobjekt oder in ein temporäres zusammengesetztes Metaobjekt abzubilden sind.

12. Verfahren nach einem der beiden vorhergehenden Ansprüche, **dadurch gekennzeichnet, dass**

- in einem ersten Schritt die Datenobjekte des zusammengesetzten Datenobjektes unabhängig voneinander, vorzugsweise gemäß dem Verfahren nach einem der Ansprüche 1 bis 9 synchronisiert werden, und
- in einem zweiten Schritt die Beziehungen der Datenobjekte zueinander synchronisiert werden,

wobei die Beziehung zwischen zwei Datenobjekten eines zusammengesetzten Datenobjektes vorzugsweise ebenfalls ein Datenobjekt ist, wobei die Beziehung vorzugsweise gemäß dem Verfahren nach einem der Ansprüche 1 bis 9 synchronisiert wird.

13. System zur Synchronisation eines ersten Datenobjektes ($DO_1$) mit zumindest einem zweiten Datenobjekt ($DO_2$), wobei das System eine Datenverarbeitungseinrichtung (DV) umfasst, die angepasst ist, ein Verfahren gemäß einem der vorhergehenden Ansprüche auszuführen.

14. System nach dem vorhergehenden Anspruch, wobei die Datenverarbeitungseinrichtung (DV) über ein Kommunikationsnetzwerk (K) mit zumindest einer Speichereinrichtung ($DB_1$; $DB_2$) koppelbar ist, und angepasst ist, das erste Datenobjekt ($DO_1$) über das Kommunikationsnetzwerk von der Speichereinrichtung ($DB_1$) entgegenzunehmen und das zweite Datenobjekt ($DO_2$), nachdem es mit dem ersten Datenobjekt synchronisiert worden ist, zur Übertragung über das Kommunikationsnetzwerk auf die Speichereinrichtung ($DB_2$) bereitzustellen.

15. Computerprogrammprodukt, das, wenn es in den Speicher einer Datenverarbeitungseinrichtung (DV) geladen wird und auf dieser zur Ausführung gebracht wird, diese Datenverarbeitungseinrichtung ein Verfahren nach einem der vorhergehenden Ansprüche 1 bis 12 ausführen lässt.

**Claims**

1. A computer-implemented method for synchronising a first data object ($DO_1$) with at least one second data object ($DO_2$), each data object ($DO_1$, $DO_2$) comprising a number of attributes, said method being executed on a processor, **characterised in that**

   - each data object ($DO_1$; $DO_2$) is assigned to a metaclass from among a number of metaclasses ($MK_1$ to $MK_n$), said metaclasses being organised in a tree structure (B) having a root metaclass ($MK_w$) and each of said metaclasses comprising a number of attributes;
   - within said tree structure, a metaclass is determined which is located on the path between the

first data object ($DO_1$) and the root metaclass ($MK_w$) and on the path between the second data object ($DO_2$) and the root metaclass ($MK_w$);
   - from the determined metaclass, a first metaobject ($MO_1$) and a second metaobject ($MO_2$) are generated;
   - a first transformation ($T_1$) is carried out in the course of which the first data object ($DO_1$) is transformed into the first metaobject ($MO_1$);
   - a second transformation ($T_2$) is carried out in the course of which the second data object ($DO_2$) is transformed into the second metaobject ($MO_2$);
   - said first metaobject ($MO_1$) and said second metaobject ($MO_2$) are synchronised (S); and
   - a third transformation ($T_3$) is carried out in the course of which the first metaobject ($MO_1$) is transformed into the first data object ($DO_1$) and/or the second metaobject ($MO_2$) is transformed into the second data object ($DO_2$).

2. The method as claimed in claim 1, **characterised in that** the determined metaclass is the metaclass which, on the path between the first data object ($DO_1$) and the root metaclass ($MK_w$) and/or between the second data object ($DO_2$) and the root metaclass ($MK_w$), occupies the lowermost position within the hierarchy of the tree structure (B).

3. The method as claimed in any of the preceding claims, **characterised in that**

   - in the course of the first transformation ($T_1$), attribute values of the attributes of the first data object ($DO_1$) are transformed into attribute values of the attributes of the first metaobject ($MO_1$),
   - in the course of the second transformation ($T_2$), attribute values of the attributes of the second data object ($DO_2$) are transformed into attribute values of the attributes of the second metaobject ($MO_2$), and
   - in the course of the third transformation ($T_3$)

      - attribute values of the attributes of the first metaobject ($MO_1$) are transformed into attribute values of the attributes of the first data object ($DO_1$), and/or
      - attribute values of the attributes of the second metaobject ($MO_2$) are transformed into attribute values of the attributes of the second data object ($DO_2$).

4. The method as claimed in any of the preceding claims, **characterised in that** the first transformation ($T_1$) and/or the second transformation ($T_2$) and/or the third transformation ($T_3$) each comprise a number of partial transformations, said partial transformations of a given transformation $(T_1, T_2, T_3)$ being carried out successively and in a predetermined sequential order.

5. The method as claimed in claim 4, **characterised in that** such partial transformation will transform

- the first data object $(DO_1)$ or the second data object $(DO_2)$ into a temporary metaobject $(MO_T)$, or
- a temporary metaobject $(MO_T)$ into the first data object $(DO_1)$ or into the second data object $(DO_2)$, or
- a temporary metaobject $(MO_T)$ into the first metaobject $(MO_1)$ or into the second metaobject $(MO_2)$, or
- the first metaobject (MO1) or the second metaobject $(MO_2)$ into a temporary metaobject $(MO_T)$,

said temporary metaobject $(MO_T)$ corresponding to an instance of a metaclass which is located on the path between the first data object $(DO_1)$ and the determined metaclass and/or between the second data object $(DO_2)$ and the determined metaclass.

6. The method as claimed in any of the preceding claims, **characterised in that** during synchronisation (S) of the first metaobject $(MO_1)$ with the second metaobject $(MO_2)$, attribute values of the attributes of the first metaobject $(MO_1)$ are mapped to attribute values of the attributes of the second metaobject $(MO_2)$, or vice versa, according to a predetermined synchronisation instruction.

7. The method as claimed in claim 4 or 5, **characterised in that** each transformation $(T_1, T_2, T_3)$ and/or each partial transformation has at least one transformation rule (TR) assigned thereto which comprises a mapping instruction indicating the way in which the attributes of a data object $(DO_1, DO_2)$, a temporary metaobject or a metaobject $(MO_1, MO_2)$ are to be mapped to the attributes of a data object $(DO_1, DO_2)$, a temporary metaobject, or a metaobject $(MO_1, MO_2)$.

8. The method as claimed in any of the preceding claims, **characterised in that** each of the data objects $(DO_1, DO_2)$ comprises an identifier indicating the metaclass $(MK_1$ to $MK_n)$ to which the respective data object is assigned.

9. The method as claimed in any of the preceding claims, **characterised in that** prior to the second transformation $(T_2)$ or after and/or during the third transformation $(T_3)$, the second data object $(DO_2)$ is generated and stored, if the second data object has not existed prior to synchronisation.

10. The method as claimed in any of the preceding claims, **characterised in that** the data objects $(DO_1; DO_2)$ are composed data objects, each composed data object comprising a number of data objects that are related to one another, a predetermined data object being a master data object in the composed data object, said master data objects of the composed data objects to be synchronised being synchronised, the further data objects related to the master data objects of the composed data object being automatically synchronised as well, and the mutual relationships between the data objects of the composed data objects being also synchronised in the course of the synchronisation of said composed data objects.

11. The method as claimed in the preceding claim, **characterised in that** the transformation rule(s) also comprise(s) a mapping instruction indicating the way in which the master data object and the further data objects of the composed data object that are related to the master data object are to be mapped to a temporary master metaobject or to a temporary composed metaobject.

12. The method as claimed in any of the two preceding claims, **characterised in that**

- in a first step, the data objects of the composed data object are synchronised independently of each other, preferably in accordance with the method as claimed in any one of claims 1 to 9, and
- in a second step, the mutual relationships between said data objects are synchronised,

the relationship between two data objects of a composed data object being preferably itself a data object, said relationship being preferably synchronised in accordance with the method as claimed in any one of claims 1 to 9.

13. A system for synchronising a first data object $(DO_1)$ with at least one second data object $(DO_2)$, wherein said system comprises a data processing device (DV) which is adapted to execute a method as claimed in any of the preceding claims.

14. The system as claimed in the preceding claim, wherein said data processing device (DV) may be coupled to at least one storage device $(DB_1; DB_2)$ via a communications network (K), and is adapted to receive the first data object $(DO_1)$ from the storage device $(DB_1)$ via the communications network and to provide the second data object $(DO_2)$ for transmission to the storage device $(DB_2)$ via the communications network once it has been synchronised with the first data object.

**15.** A computer program product which, when it is loaded into the memory of a data processing device (DV) and is executed on said device, causes this data processing device to execute a method as claimed in any one of the preceding claims 1 to 12.

## Revendications

**1.** Procédé mis en oeuvre par ordinateur destiné à synchroniser un premier objet de données ($DO_1$) avec au moins un deuxième objet de données ($DO_2$), chaque objet de données ($DO_1$ ; $DO_2$) comprenant un nombre donné d'attributs, ledit procédé étant exécuté sur un processeur, **caractérisé en ce que**

- chaque objet de données ($DO_1$ ; $DO_2$) est alloué à une métaclasse sélectionnée parmi un nombre donné de métaclasses ($MK_1$ à $MK_n$), les métaclasses étant organisées en une structure arborescente (B) avec une métaclasse racine ($MK_w$), et les métaclasses comprenant respectivement un nombre donné d'attributs;
- dans la structure arborescente est déterminée une métaclasse qui se trouve sur le chemin d'accès entre le premier objet de données ($DO_1$) et la métaclasse racine ($MK_w$) et sur le chemin d'accès entre le deuxième objet de données ($DO_2$) et la métaclasse racine ($MK_w$),
- un premier méta-objet ($MO_1$) et un deuxième méta-objet ($MO_2$) sont créés à partir de la métaclasse déterminée ;
- une première transformation ($T_1$) est effectuée lors de laquelle le premier objet de données ($DO_1$) est transformé en premier méta-objet ($MO_1$) ;
- une deuxième transformation ($T_2$) est effectuée lors de laquelle le deuxième objet de données ($DO_2$) est transformé en deuxième méta-objet ($MO_2$) ;
- le premier méta-objet ($MO_1$) et le deuxième méta-objet ($MO_2$) sont synchronisés (S) ; et
- une troisième transformation ($T_3$) est effectuée, lors de laquelle le premier méta-objet ($MO_1$) est transformé en premier objet de données ($DO_1$) et/ou le deuxième méta-objet ($MO_2$) est transformé en deuxième objet de données ($DO_2$).

**2.** Procédé selon la revendication 1, **caractérisé en ce que** la métaclasse déterminée est la métaclasse qui se trouve sur le chemin d'accès entre le premier objet de données ($DO_1$) et la métaclasse racine ($MK_w$) et/ou entre le deuxième objet de données ($DO_2$) et la métaclasse racine ($MK_w$), et ce le plus bas dans la hiérarchie de la structure arborescente (B).

**3.** Procédé selon l'une quelconque des revendications précédentes, **caractérisé en ce que**

- lors de la première transformation ($T_1$), des valeurs d'attribut des attributs du premier objet de données ($DO_1$) sont transformées en des valeurs d'attribut des attributs du premier méta-objet ($MO_1$),
- lors de la deuxième transformation ($T_2$), des valeurs d'attribut des attributs du deuxième objet de données ($DO_2$) sont transformées en des valeurs d'attribut des attributs du deuxième méta-objet ($MO_2$), et
- lors de la troisième transformation ($T_3$),

- des valeurs d'attribut des attributs du premier méta-objet ($MO_1$) sont transformées en des valeurs d'attribut des attributs du premier méta-objet ($DO_1$) et/ou
- des valeurs d'attribut des attributs du deuxième méta-objet ($MO_2$) sont transformées en des valeurs d'attribut des attributs du deuxième objet de données ($DO_2$).

**4.** Procédé selon l'une quelconque des revendications précédentes, **caractérisé en ce que** la première transformation ($T_1$) et/ou la deuxième transformation ($T_2$) et/ou la troisième transformation ($T_3$) comprend/comprennent respectivement un nombre donné de transformations partielles, les transformations partielles d'une transformation ($T_1$, $T_2$, $T_3$) étant exécutées de manière successive et dans un ordre de succession prédéterminé.

**5.** Procédé selon la revendication 4, **caractérisé en ce qu'**une transformation partielle transforme

- le premier objet de données ($DO_1$) ou le deuxième objet de données ($DO_2$) en un méta-objet temporaire ($MO_T$), ou
- un méta-objet temporaire ($MO_T$) en premier objet de données (DO1) ou en deuxième objet de données ($DO_2$), ou
- un méta-objet temporaire ($MO_T$) en premier méta-objet ($MO_1$) ou en deuxième méta-objet ($MO_2$), ou
- le premier méta-objet ($MO_1$) ou le deuxième méta-objet ($MO_2$) en un méta-objet temporaire ($MO_T$),

le méta-objet temporaire ($MO_T$) correspondant à une instance d'une métaclasse qui se trouve sur le chemin d'accès entre le premier objet de données ($DO_1$) et la métaclasse déterminée et/ou entre le deuxième objet de données ($DO_2$) et la métaclasse déterminée.

**6.** Procédé selon l'une quelconque des revendications précédentes, **caractérisé en ce que** lors de la synchronisation (S) du premier méta-objet ($MO_1$) avec le deuxième méta-objet ($MO_2$), des valeurs d'attribut des attributs du premier méta-objet ($MO_1$) sont répliquées en tant que valeurs d'attribut des attributs du deuxième méta-objet ($MO_2$), ou vice versa, selon une instruction de synchronisation prédéterminée.

7. Procédé selon la revendication 4 ou 5, **caractérisé en ce qu'**à chaque transformation ($T_1$, $T_2$, $T_3$) et/ou à chaque transformation partielle est allouée au moins une règle de transformation (TR) qui comprend une instruction de réplication laquelle indique comment les attributs d'un objet de données ($DO_1$, $DO_2$), d'un méta-objet temporaire ou d'un méta-objet ($MO_1$, $MO_2$) doivent être répliqués en tant qu'attributs d'un objet de données ($DO_1$, $DO_2$), d'un méta-objet temporaire ou d'un méta-objet ($MO_1$, $MO_2$).

8. Procédé selon l'une quelconque des revendications précédentes, **caractérisé en ce que** les objets de données ($DO_1$, $DO_2$) comprennent respectivement un identifiant qui indique à quelle métaclasse ($MK_1$ à $MK_n$) l'objet de données respectif est alloué.

9. Procédé selon l'une quelconque des revendications précédentes, **caractérisé en ce que** le deuxième objet de données est créé et stocké avant la deuxième transformation ($T_2$) ou bien après ou pendant la troisième transformation ($T_3$) si le deuxième objet de données ($DO_2$) n'existe pas avant la synchronisation.

10. Procédé selon l'une quelconque des revendications précédentes, **caractérisé en ce que** les objets de données ($DO_1$; $DO_2$) sont des objets de données composés, chaque objet de données composé comprenant un nombre donné d'objets de données qui ont une relation entre eux, dans ledit objet de données composé, un objet de données prédéterminé étant un objet de données maître, les objets de données maîtres des objets de données composés à synchroniser étant synchronisés, les autres objets de données de l'objet de données composé, lesquels sont en relation avec les objets de données maîtres, étant automatiquement synchronisés en même temps et lors de la synchronisation des objets de données composés, les relations reliant entre eux les objets de données desdits objets de données composés étant également synchronisées.

11. Procédé selon la revendication précédente, **caractérisé en ce que** la règle de transformation ou les règles de transformations comprennent également une instruction de réplication qui indique comment l'objet de données maître et les autres objets de données de l'objet de données composé lesquels sont en relation avec ledit objet de données maître doivent être répliqués dans un méta-objet maître temporaire ou dans un méta-objet composé temporaire.

12. Procédé selon l'une des deux revendications précédentes, **caractérisé en ce que**

   - dans une première étape, les objets de données de l'objet de données composé sont synchronisés de manière indépendante les uns des autres, de préférence conformément au procédé selon l'une quelconque des revendications 1 à 9, et
   - dans une deuxième étape, les relations des objets de données entre eux sont synchronisées,

   la relation entre deux objets de données d'un objet de données composé étant de préférence également un objet de données, la relation étant synchronisée de préférence conformément au procédé selon l'une quelconque des relations 1 à 9.

13. Système destiné à synchroniser un premier objet de données ($DO_1$) avec au moins un deuxième objet de données ($DO_2$), le système comprenant un dispositif de traitement de donnés (DV) qui est conçu pour exécuter un procédé selon l'une quelconque des revendications précédentes.

14. Système selon la revendication précédente, dans lequel le dispositif de traitement de données (DV) peut être couplé à au moins un dispositif de stockage ($DB_1$; $DB_2$) par le biais d'un réseau de communication (K) et est conçu pour recevoir dudit dispositif de stockage ($DB_1$), par le biais du réseau de communication, le premier objet de données ($DO_1$) et pour fournir le deuxième objet de données ($DO_2$), une fois que celui-ci a été synchronisé avec le premier objet de données, afin qu'il soit transmis sur le dispositif de stockage ($DB_2$) par le biais dudit réseau de communication.

15. Produit programme d'ordinateur qui, lorsqu'il est chargé dans la mémoire d'un dispositif de traitement de données (DV) et qu'il est exécuté dans celui-ci, fait en sorte que ledit dispositif de traitement de données exécute un procédé selon l'une quelconque des revendications 1 à 12.

**Fig. 1**

**Stand der Technik**

**Fig. 2**

**Fig. 3**

**Fig. 4**

**Fig. 5**

**Fig. 6**

**Fig. 7**